# FASCICULE DE BREVET EUROPEEN

(11) **EP 0 943 708 B1**
(45) Date de publication et mention de la délivrance du brevet: **22.05.2002**
(21) Numéro de dépôt: 99420074.9
(22) Date de dépôt: 18.03.1999
(51) Int. Cl.: D03C 1/14, F16C 7/00

(54) **Mécanisme de tirage pour mécanique d'armure et métier à tisser comprenant un tel mécanisme de tirage**
Zugvorrichtung für Fachbildungsmechanismen und Webmaschine mit einer solchen Vorrichtung
Traction device for shedding mechanisms and loom with such a device

(30) Priorité: 19.03.1998 FR 9803632
(43) Date de publication de la demande: 22.09.1999
(73) Titulaire: STÄUBLI FAVERGES, 74210 Faverges (FR)
(72) Inventeur: Fumex, André, Les Balmettes, 74290 Talloires (FR)
(74) Mandataire: Myon, Gérard Jean-Pierre

(56) Documents cités:
- EP-A- 0 598 165
- EP-A- 0 807 702
- FR-A- 2 162 598
- FR-A- 2 676 467

## Description

L'invention a trait à un mécanisme de tirage associé à une ratière ou à une autre mécanique d'armure pour la formation de la foule sur un métier à tisser. Elle vise plus particulièrement les mécanismes de tirage de bielles qui assurent l'accouplement des organes mobiles d'actionnement d'une telle mécanique avec les cadres de lisses à déplacement vertical montés sur le métier. L'invention a également trait à un métier à tisser équipé d'un tel mécanisme.

Dans les dispositifs classiques, les embouts des bielles ne sont pas démontables. Des flasques sont créés aux extrémités des bielles par découpage, ce qui a pour effet d'affaiblir mécaniquement ces bielles. Compte tenu des vitesses de fonctionnement des métiers à tisser modernes et de l'intensité des efforts transmis par le mécanisme de tirage, ceci peut résulter dans une rupture d'une bielle, notamment au niveau de son attelage avec un levier voisin.

Par le document FR-A-2 676 467, on connaît un mécanisme de tirage résolvant une partie de ces problèmes et dans lequel une bielle tubulaire à section aplatie est pourvue d'au moins un embout comprenant deux flasques, prévus pour être disposés de part et d'autre d'un levier oscillant et articulés sur ce levier, et au moins une partie apte à pénétrer et à être immobilisée dans une extrémité de la bielle.

Le premier dispositif décrit dans ce document comprend deux flasques découpés d'une échancrure longitudinale définissant deux bords allongés destinés à coopérer avec des poussoirs prévus pour être insérés à l'intérieur d'une extrémité de la bielle. Il s'avère qu'il est difficile d'obtenir des formes des mors et des poussoirs permettant un appui efficace à l'intérieur de l'extrémité de la bielle, de sorte que l'accrochage de l'embout à l'intérieur de la bielle n'est pas optimum. En outre, ce dispositif comprend plusieurs pièces distinctes qui peuvent être séparées les unes des autres et l'on ne saurait exclure tout risque de perte des pièces lors d'un démontage.

Ce document divulgue également une seconde version d'un embout qui comprend deux flasques formant une pièce monobloc avec deux parties déformables destinées à être logées à l'intérieur de l'extrémité de la bielle. Une telle pièce, de forme complexe, est difficile à industrialiser à un coût acceptable, alors qu'elle doit être réalisée avec une grande précision pour coopérer efficacement avec la bielle et le levier auxquels elle doit être associée.

C'est à ces inconvénients qu'entend plus particulièrement remédier l'invention en proposant une nouvelle structure d'embout de bielle qui peut être réalisée de façon plus économique, tout en présentant une rigidité et une adéquation aux formes de la bielle et du levier satisfaisantes.

Dans cet esprit, l'invention concerne un mécanisme de tirage interposé entre une mécanique d'armure et des cadres de lisses d'un métier à tisser, du genre comprenant au moins une bielle tubulaire à section aplatie qui, pour son attelage à au moins un levier oscillant de liaison, est pourvue d'au moins un embout comprenant deux flasques prévus pour être disposés de part et d'autre du levier et articulés sur ce levier, et au moins une partie apte à pénétrer et à être immobilisée dans une extrémité de la bielle, caractérisé en ce que la partie apte à pénétrer dans l'extrémité de la bielle est formée de deux axes sensiblement parallèles, chaque axe comprenant une première extrémité disposée entre les deux flasques et soudée sur les faces en regard de ces deux flasques, et une partie déformable permettant le réglage de la distance séparant les secondes extrémités des axes, à l'intérieur de la bielle.

L'embout du mécanisme de tirage de l'invention présente une excellente rigidité alors que son prix de revient est particulièrement attractif du fait de la simplicité des pièces qui le constituent. Les flasques peuvent être obtenus par tout moyen approprié, et notamment par découpage. Les axes peuvent être fabriqués par tournage ou par frittage, ces deux types d'opérations étant convenablement maîtrisés sur le plan industriel, tant en ce qui concerne les aspects de qualité que les aspects économiques. Le soudage des axes entre les flasques peut être effectué avec une grande précision, d'où il résulte un positionnement précis des axes et une coopération optimale entre les surfaces complémentaires des axes et de la bielle.

Selon un premier aspect avantageux de l'invention, la partie déformable est constituée par une partie de section réduite de chaque axe. Le caractère plus ou moins déformable de chaque axe peut être ainsi défini par la section de la partie déformable.

Selon un autre aspect avantageux de l'invention, chaque axe est pourvu, à proximité de sa seconde extrémité, d'un dégagement définissant deux parties aptes à coopérer avec des moyens de réglage de la distance séparant les secondes extrémités des axes et à venir en appui contre une surface interne de la bielle. Ce dégagement permet de localiser les efforts de contact de chaque axe avec la surface interne de la bielle au niveau des parties coopérant avec les moyens de réglage. Les zones de contact entre les axes et la bielle sont d'aire relativement faible, ce qui améliore l'intensité de l'effort de poussée exercé sur la bielle. Dans ce cas, on peut prévoir que les parties des axes aptes à coopérer avec les moyens de réglage ont une section supérieure à celle de la section de la partie déformable.

Avantageusement, les parties des axes aptes à coopérer avec les moyens de réglage sont pourvus de perçages de réception et/ou de centrage de vis d'écartement. On peut prévoir que les perçages d'un premier axe sont traversants et taraudés au pas des vis de réglage, alors que les perçages du second axe sont borgnes. Les perçages du second axe sont destinés à recevoir les extrémités des vis de réglage.

Selon un autre aspect avantageux de l'invention, chaque axe porte, à proximité de sa première extrémité, au moins un bossage de soudage sur les flasques.

Selon un autre aspect avantageux de l'invention, chaque flasque est formé essentiellement par découpage, ce qui en fait une pièce particulièrement économique avec de bonnes tolérances dimensionnelles.

Selon un mode de réalisation avantageux de l'invention, l'embout comprend quatre axes aptes à coopérer avec les extrémités de deux bielles en vue de leur attache sur un levier, ces quatre axes étant soudés entre les deux flasques.

L'invention concerne également un métier à tisser comprenant un mécanisme de tirage tel que précédemment décrit. Un tel métier à tisser est d'un prix de revient attractif alors que les opérations de maintenance, notamment de maintenance préventive par échange des bielles, peuvent être réalisées de façon relativement simple.

L'invention sera mieux comprise et d'autres avantages de celle-ci apparaîtront plus clairement à la lumière de la description qui va suivre de deux modes de réalisation d'un mécanisme de tirage pour métier à tisser conforme à son principe, donnée uniquement à titre d'exemple et faite en référence aux dessins annexés dans lesquels :
- la figure 1 est une représentation schématique de principe d'un métier à tisser conforme à l'invention ;
- la figure 2 est une vue en perspective éclatée des éléments constitutifs d'un embout d'attelage d'une bielle sur un levier oscillant du métier de la figure 1 ;
- la figure 3 est une vue de côté, avec arrachement partiel, d'un attelage réalisé avec les éléments de la figure 2 ;
- la figure 4 est une vue de dessus de l'attelage de la figure 3 ;
- la figure 5 est une vue de côté, avec arrachement partiel, d'un attelage réalisé grâce à un embout conforme à un second mode de réalisation de l'invention et
- la figure 6 est une vue en perspective de deux axes de l'embout de la figure 5 en position montée.

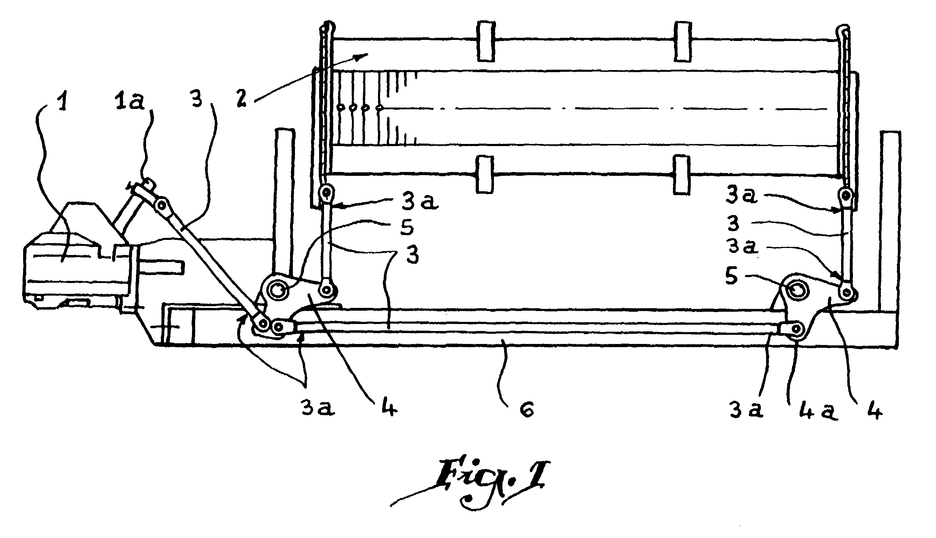

A la figure 1, une ratière 1 est destinée à entraîner un cadre de lisses 2 d'un métier à tisser dans un mouvement vertical oscillant. Pour ce faire, un bras d'actionnement 1a de la ratière 1 est attelé par une série de bielles 3, orientées obliquement, horizontalement ou verticalement, à deux leviers oscillants 4 montés de part et d'autre du métier et articulés autour d'axes 5 fixes par rapport au bâti 6 du métier.

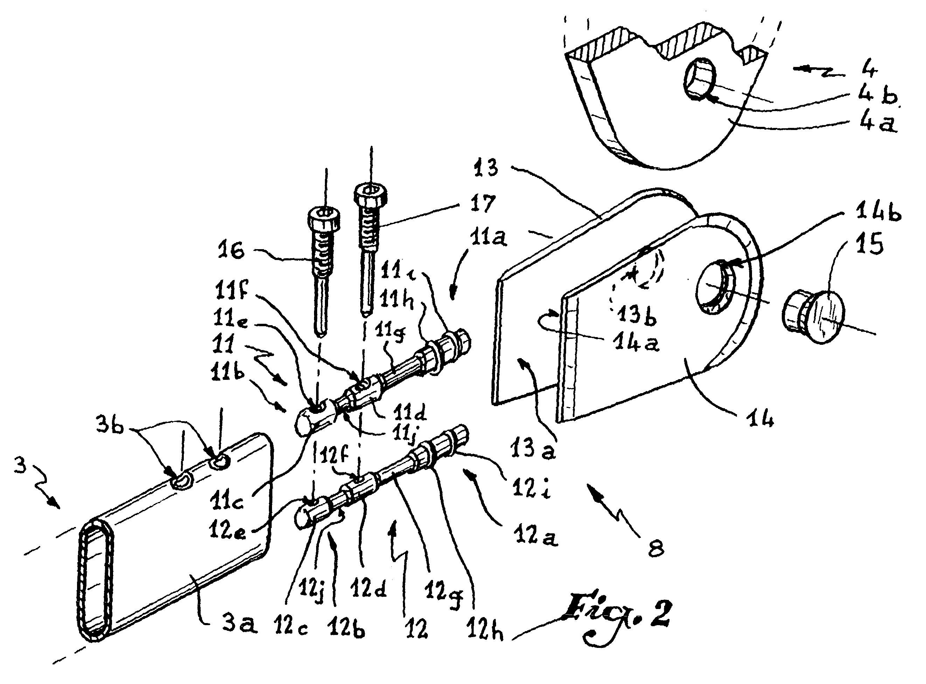

Comme il ressort plus particulièrement de la figure 2, chaque bielle 3 est prévue sous la forme d'un tube à section aplatie. On note 3a l'extrémité de la bielle visible aux figures 2 à 4 et qui est destinée à être attelée à une queue 4a d'un levier 4. Un embout 8 est prévu pour l'attelage des éléments 3a et 4a.

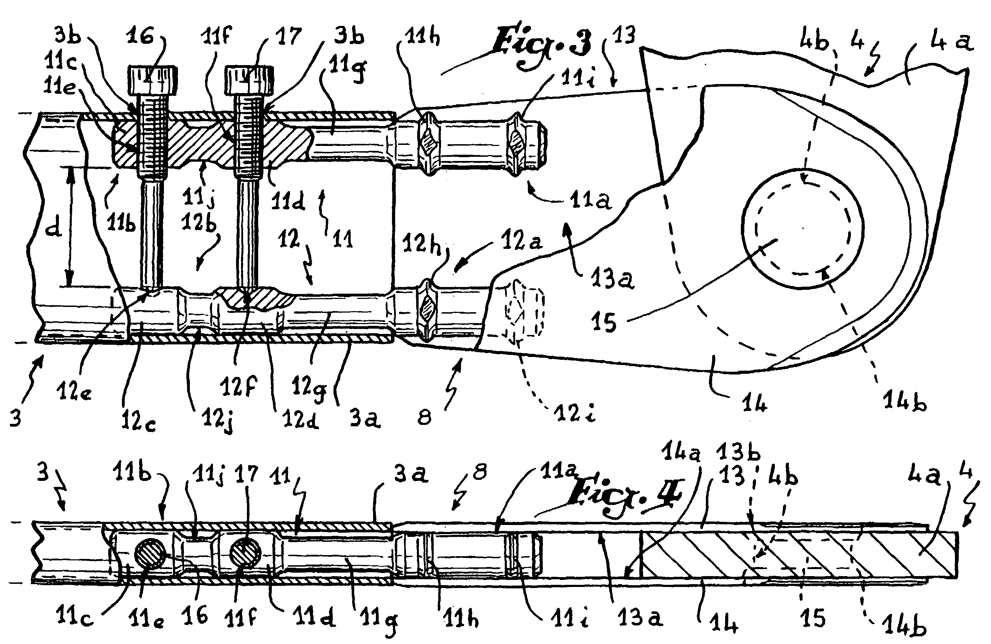

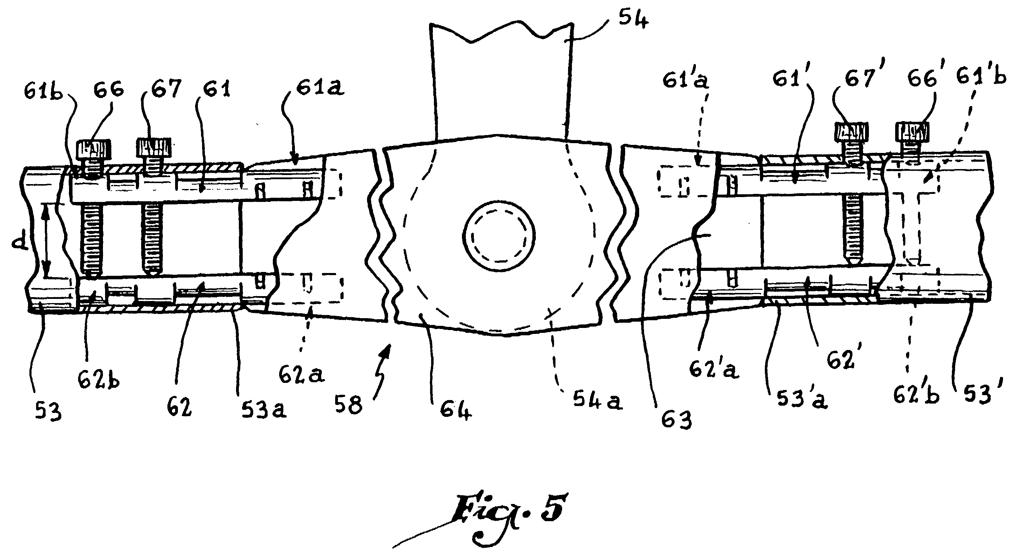

Cet embout est essentiellement constitué de deux axes 11 et 12 et de deux flasques 13 et 14 destinés à être soudés ensemble dans la configuration représentée aux figures 3 et 4. Plus précisément, les axes 11 et 12 comprennent une première extrémité 11a et 12a prévue pour être soudée sur les faces en regard 13a et 14a des flasques 13 et 14, ces faces étant prévues pour entourer la queue 4a du levier 4. Les flasques 13 et 14 portent chacun un orifice 13b et 14b apte à être aligné avec un orifice central 4b de la queue 4a pour le passage d'un pion ou rivet 15 ou d'une vis et d'un écrou de liaison.

Par ailleurs, les axes 11 et 12 comprennent, au niveau de leurs secondes extrémités respectives 11b et 12b, deux parties 11c et 11d, respectivement 12c et 12d, destinées à coopérer avec des vis de réglage 16 et 17 de l'écartement des extrémités 11b et 12b à l'intérieur de l'extrémité 3a de la bielle 3.

L'extrémité 3a de la bielle 3 comporte deux perçages 3b de passage des vis 16 et 17 lorsque les extrémités 11b et 12b des axes 11 et 12 sont introduites à l'intérieur de l'extrémité 3a, comme représenté aux figures 3 et 4.

On note que les vis 16 et 17 traversent les parties 11c et 11d de l'axe 11 dans lesquelles sont définis deux orifices taraudés 11e et 11f dont les taraudages sont adaptés à coopérer avec les filetages des vis 16 et 17. Par ailleurs, les parties 12c et 12d de l'axe 12 portent des perçages borgnes 12e et 12f de réception et de centrage des extrémités des vis 16 et 17.

Dans la position des figures 3 et 4, le vissage des vis 16 et 17 tend à faire progresser les parties 11c et 11d de l'axe 11 vers la tête des vis 16 et 17, ce qui a pour effet d'écarter les secondes extrémités 11b et 12b des axes 11 et 12 et de bloquer l'embout 8 par rapport à la bielle 3. Le dévissage des vis provoque l'effet inverse, utilisé notamment pour un démontage de l'attelage.

Une partie déformable est respectivement définie sur les axes 11 et 12 par une zone 11g ou 12g de diamètre réduit, disposée entre les extrémités 11a et 11b, respectivement 12a et 12b. Les parties déformables 11g et 12g autorisent, par leur souplesse, le réglage de la distance d entre les extrémités 11b et 12b des axes 11 et 12 par l'action des vis 16 et 17.

Comme il ressort plus particulièrement des figures 2 à 4, l'axe 11 porte, au niveau de sa première extrémité 11a, deux bossages périphériques 11h et 11i de soudage contre les faces 13a et 14a des flasques 14 et 13. Ces bossages 11h et 11i permettent, notamment, une soudure électrique par contact à chaud lorsque l'extrémité 11a de l'axe 11 est disposée entre les flasques 13 et 14. De la même manière, des bossages de soudage 12h et 12i sont prévus sur l'axe 12. L'assemblage des axes et des flasques par soudure est à la fois résistant et parfaitement défini sur le plan dimensionnel.

Par ailleurs, une gorge 11j est définie entre les parties 11c et 11d de l'axe 11, de sorte que l'appui de l'axe 11 contre la surface interne de l'extrémité 3a de la bielle 3 est concentré au niveau des parties 11c et 11d, ce qui améliore l'ancrage de cet axe dans l'extrémité de la bielle. De la même manière, une gorge 12j est prévue entre les extrémités 12c et 12d de l'axe 12.

Compte tenu de ce qui précède, un blocage particulièrement efficace des axes 11 et 12 à l'intérieur de la bielle 3 peut être obtenu par coopération de formes entre la surface interne de l'extrémité 3a de la bielle 3 et les parties 11c, 11d, 12c et 12d des axes 11 et 12 qui sont à section transversale globalement circulaire et dont le diamètre est supérieur à celui des zones déformables 11g et 12g ou à celui des fonds des gorges 11j et 12j.

L'embout 8 constitué des pièces 11 à 14 et 16 et 17 est économique, car chaque pièce peut être obtenue par des opérations d'usinage simple.

En particulier, les axes 11 et 12 sont obtenus essentiellement par tournage, les orifices ou perçages 11e, 11f, 12e et 12f pouvant être façonnés suivant des gammes d'usinage simples. Les flasques 13 et 14 sont, quant à eux, découpés dans une tôle, ce qui autorise une production en grande série avec d'excellentes tolérances dimensionnelles.

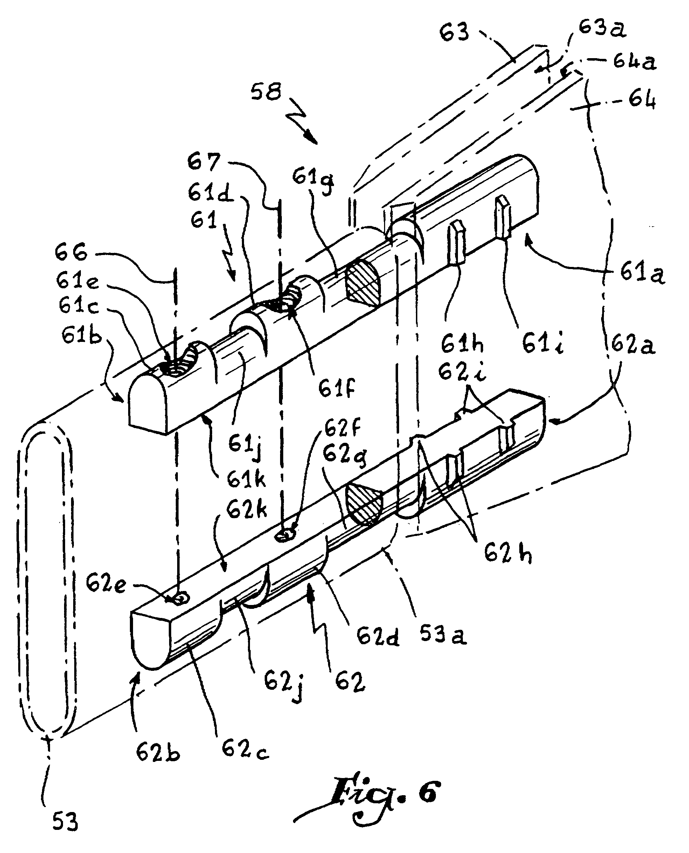

Dans le second mode de réalisation de l'invention représenté aux figures 5 et 6, les éléments analogues à ceux du mode de réalisation des figures 2 à 4 portent des références identiques augmentées de 50. Un embout 58 permet de raccorder deux bielles 53 et 53' à une queue 54a d'un levier 54. L'embout 58 est essentiellement constitué de quatre axes 61, 62, 61' et 62' et de deux flasques 63 et 64 destinés à être soudés ensemble dans la configuration représentée aux figures 5 et 6.

Les axes 61 et 62 sont prévus pour pénétrer dans une extrémité 53a de la bielle 53, alors que les axes 61' et 62' sont prévus pour pénétrer dans une extrémité 53'a de la bielle 53'. Chaque axe 61, 61', 62 ou 62' comprend une première extrémité 61a, 61'a, 62a ou 62'a destinée à être soudée sur les faces en regard 63a et 64a des flasques 63 et 64. Pour ce faire et comme cela ressort plus clairement à la figure 6, les axes 61 et 62 portent quatre bossages périphériques 61h, 61i et 62h, 62i permettant une soudure par contact.

Ils comprennent également une partie déformable 61g, 62g dont la section, qui apparaît hachurée à la figure 6, a une aire inférieure à celle des sections des extrémités 61a, 62a et des extrémités opposées 61b, 62b des axes 61, 62 qui sont destinées à pénétrer à l'intérieur de l'extrémité 53a de la bielle 53.

Au niveau de leurs secondes extrémités 61b, 62b, les axes 61 et 62 portent deux parties 61c, 61d et 62c, 62d destinées à coopérer avec des vis de réglage 66 et 67 pour venir en appui contre la surface interne de l'extrémité 53a de la bielle 53. Les parties 62c et 62d sont séparées, du côté de l'axe 62 prévu pour venir au contact de la surface interne de la bielle 53, par un dégagement 62j tel que les surfaces des parties 62c et 62d en contact avec la surface interne de la bielle 53 sont d'aire relativement faible, ce qui facilite l'ancrage de l'axe 62 à l'intérieur de l'extrémité 53a de la bielle 53. De même, les parties 61c et 61d de l'axe 61 sont séparées par un dégagement 61j.

Les axes 61 et 62 sont respectivement pourvus chacun de deux perçages traversants, 61e et 61f, et borgnes, 62e et 62f, de réception et de centrage des vis 66 et 67.

La surface supérieure 62k de l'axe 62, c'est-à-dire la surface en regard de l'axe 61, est plane, de sorte qu'une section transversale de l'axe 62 a une forme d'ovale ou d'ellipse tronqué. De même, la surface inférieure 61k de l'axe 61 est plane. Les surfaces bombées des axes 61 et 62 viennent au contact de la surface interne de l'extrémité 53a de la bielle 53. Les axes 61' et 62' sont respectivement identiques aux axes 61 et 62.

Comme précédemment, les vis de réglage 66 et 67 traversent les orifices taraudés 61e et 61f de l'axe 61 et permettent de régler la distance d séparant l'extrémité 61b de l'axe 61, destinée à être logée dans la bielle 53, de l'extrémité 62b de l'axe 62 à l'intérieur de la bielle 53. Un fonctionnement analogue est obtenu pour les axes 61' et 62' grâce à des vis de réglage 66' et 67'.

Les axes 61, 62, 61' et 62' sont obtenus par frittage, c'est-à-dire par une méthode fiable et économique, de sorte que la qualité de l'embout obtenu est très satisfaisante, alors que son prix de revient est attractif.

En outre, le frittage permet d'envisager l'emploi de matériaux spécifiques pour obtenir des propriétés élastiques adaptées des parties déformables 61g, 62g ou équivalentes des axes 61, 62, 61' ou 62'.

Bien entendu, les axes 11 et 12 du premier mode de réalisation pourraient également être fabriqués par frittage.

## Revendications

1. Mécanisme de tirage interposé entre une mécanique d'armure (1) et des cadres de lisses (2) d'un métier à tisser, du genre comprenant au moins une bielle (3 ; 53, 53') tubulaire à section aplatie qui, pour son attelage à au moins un levier oscillant de liaison (1a, 4 ; 54), est pourvue d'au moins un embout (8 ; 58) comprenant deux flasques (13, 14 ; 63, 64), prévus pour être disposés de part et d'autre dudit levier et articulés sur ledit levier, et au moins une partie apte à pénétrer et à être immobilisée dans une extrémité (3a ; 53a, 53'a) de ladite bielle, **caractérisé en ce que** ladite partie apte à pénétrer dans ladite extrémité de ladite bielle est formée de deux axes (11, 12) sensiblement parallèles, chaque axe comprenant une première extrémité (11a, 12a ; 61a, 62a, 61'a, 62'a), disposée entre lesdits deux flasques (13, 14 ; 63, 64) et soudée sur les faces en regard (13a, 14a ; 63a, 64a) desdits deux flasques, et une partie déformable (11g, 12g ; 61g, 62g) permettant le réglage de la distance (d) séparant des secondes extrémités (11b, 12b ; 61b, 62b) desdits axes, à l'intérieur de ladite bielle.

2. Mécanisme de tirage selon la revendication 1, **caractérisé en ce que** lesdits axes (11, 12 ; 61, 62) sont fabriqués par tournage ou par frittage.

3. Mécanisme de tirage selon l'une des revendications 1 ou 2, **caractérisé en ce que** ladite partie déformable est constituée par une zone de section réduite (11g, 12g ; 61g, 62g) de chaque axe (11, 12 ; 61, 62, 61', 62').

4. Mécanisme de tirage selon l'une des revendications 1 à 3, **caractérisé en ce que** chaque axe est pourvu, à proximité de sa seconde extrémité (11b, 12b ; 61b, 62b), d'un dégagement (11j, 12j ; 61j, 62j) définissant deux parties (11c, 11d, 12c, 12d ; 61c, 61d, 62c, 62d) aptes à coopérer avec des moyens de réglage (16, 17 ; 66, 67) de la distance (d) séparant lesdites secondes extrémités et à venir en appui contre une surface interne de ladite bielle (3 ; 53, 53').

5. Mécanisme de tirage selon la revendication 4, **caractérisé en ce que** lesdites parties (11c, 11d, 12c, 12d ; 61c, 61d 62c, 62d) desdits axes (11, 12 ; 61, 62, 61', 62') aptes à coopérer avec lesdits moyens de réglage (16, 17 ; 66, 67) ont une section supérieure à celle de la section de ladite partie déformable (11g, 12g ; 61g, 62g).

6. Mécanisme de tirage selon l'une des revendications 4 ou 5, **caractérisé en ce que** lesdites parties (11c, 11d, 12c, 12d ; 61c, 61d, 62c, 62d) desdits axes (11, 12 ; 61, 62, 61', 62') aptes à coopérer avec lesdits moyens de réglage sont pourvues de perçages (11e, 11f, 12e, 12f ; 61e, 61f, 62e, 62f) de réception et/ou de centrage de vis d'écartement (16, 17 ; 66, 67).

7. Mécanisme de tirage selon la revendication 6, **caractérisé en ce que** lesdits perçages (11e, 11f ; 61e, 61f) d'un premier axe (11 ; 61) sont traversants et taraudés au pas desdites vis de réglage (16, 17 ; 66, 67) alors que lesdits perçages (12e 12f ; 62e, 62f) du second axe (12 ; 62) sont borgnes.

8. Mécanisme de tirage selon l'une des revendications précédentes, **caractérisé en ce que** chaque axe (11, 12 ; 61, 62, 61', 62') porte, à proximité de sa première extrémité (11a, 12a ; 61a, 62a, 61'a, 62'a) au moins un bossage de soudage (11h, 11i, 12h, 12i ; 61h, 61i, 62h, 62i) sur lesdits flasques (13, 14 ; 63, 64).

9. Mécanisme de tirage selon l'une des revendications précédentes, **caractérisé en ce que** chaque flasque (13, 14 ; 63, 64) est formé essentiellement par découpage.

10. Mécanisme de tirage selon l'une des revendications précédentes, **caractérisé en ce que** ledit embout (58) comprend quatre axes (61, 62, 61', 62') aptes à coopérer avec les extrémités (53a, 53'a) de deux bielles (53, 53') en vue de leur attache sur un levier (54), lesdits quatre axe étant soudés entre lesdits deux flasques (63, 63).

11. Métier à tisser comprenant un mécanisme de tirage (3-17 ; 53-57) selon l'une des revendications précédentes.

## Patentansprüche

1. Zugvorrichtung, die zwischen einer Schaftmaschine (1) und Schaftrahmen (2) einer Webmaschine angeordnet ist, der Art, die mindestens eine rohrförmige Stange (3; 53; 53') mit abgeflachtem Querschnitt umfaßt, die für ihre Lagerung an mindestens einem schwingenden Verbindungshebel (1a, 4; 54) mit mindestens einem Ansatzstück (8, 58) mit zwei Flanschen (13, 14; 63, 64) versehen ist, die zur beidseitigen Anordnung des Hebels vorgesehen sind und mit dem Hebel gelenkig verbunden sind, und mindestens ein Teil geeignet ist, in ein Ende (3a; 53a; 53'a) einzugreifen und daran festgelegt zu werden, **dadurch gekennzeichnet, daß** das zum Eingreifen in das Ende der Stange geeignete Teil aus zwei im wesentlichen parallelen Achsen (11, 12) gebildet ist, wobei jede Achse ein erstes Ende (11a, 12a; 61a, 62a, 61'a, 62'a), das zwischen die zwei Flansche (13, 14; 63, 64) angeordnet ist und mit den gegenüberliegenden Flächen (13a, 14a; 63a, 64a) der zwei Flansche verschweißt ist und einen deformierbaren Bereich (11g, 12; 61g, 62g) umfaßt, der eine Einstellung des Abstandes (d) erlaubt, der die zweiten Enden (11b, 12b; 61b, 62b) der Achsen im Inneren der Stange trennt.

2. Zugvorrichtung nach Anspruch 1, **dadurch gekennzeichnet, daß** die zwei Achsen (11; 12; 61, 62) durch Drehen oder Sintern hergestellt sind.

3. Zugvorrichtung nach einem der Ansprüche 1 oder 2, **dadurch gekennzeichnet, daß** der deformierbare Bereich durch eine Zone (11g, 12g; 61g, 62g) mit verringertem Querschnitt jeder Achse (11, 12; 61, 62, 61', 62') gebildet wird.

4. Zugvorrichtung nach einem der Ansprüche 1 bis 3, **dadurch gekennzeichnet, daß** jede Achse in der Nähe ihres zweiten Endes mit einem Einschnitt (11j, 12j; 61j, 62j) versehen ist, der zwei Bereiche (11c, 11d, 12c, 12d) begrenzt, die geeignet sind, mit Mitteln (16, 17; 66, 67) zum Einstellen des die zweiten Enden trennenden Abstand (d) zusammenzuarbeiten und sich gegen eine Innenfläche der Stange (3; 53, 53') abzustützen.

5. Zugvorrichtung nach Anspruch 4, **dadurch gekennzeichnet, daß** die Bereiche (11c, 11d, 12c, 12d; 61c, 61d, 62c, 62d) der Achsen (11, 12; 61, 62, 61', 62'), die zum Zusammenarbeiten mit den Mitteln zum Einstellen (16, 17; 66, 67) geeignet sind, einen größeren Querschnitt aufweisen als der Querschnitt des deformierbaren Bereichs (11g, 12g; 61g, 61g).

6. Zugvorrichtung nach einem der Ansprüche 4 oder 5, **dadurch gekennzeichnet, daß** die zur Zusammenarbeit mit den Einstellmitteln geeigneten Bereiche (11c, 11d, 12c, 12d; 61c, 61d, 62c, 62d) der Achsen (11, 12; 61, 62, 61', 62') mit Bohrungen (11e, 11f, 12e, 12f; 61e, 61f, 62e, 62f) zur Aufnahme und/oder Zentrierung von Abstandsschrauben (16, 17; 66, 67) versehen sind.

7. Zugvorrichtung nach Anspruch 6, **dadurch gekennzeichnet, daß** die Bohrungen (11e, 11f; 61e, 61f) einer ersten Achse (11; 61) durchgehend und am Gewinde der Einstellschrauben (16, 17, 66, 67) mit Gewinde versehen sind, während die Bohrungen (12e, 12f; 62e, 62f) der zweiten Achse (12; 62) Sackbohrungen sind.

8. Zugvorrichtung nach einem der vohergehenden Ansprüche, **dadurch gekennzeichnet, daß** jede Achse (11, 12; 61, 62, 61', 62') in der Nähe ihres ersten Endes (11a, 12a; 61a, 62a, 61'a, 62'a) mindestens eine Wulst (11h, 11i, 12h, 12i; 61h, 61i, 62h, 62i) zum Schweißen an den Flanschen (13, 14; 63, 64) trägt.

9. Zugvorrichtung nach einem der vorhergehenden Ansprüche, **dadurch gekennzeichnet, daß** jeder Flansch (13, 14; 63, 64) im wesentlichen durch Stanzen gebildet ist.

10. Zugvorrichtung nach einem der vorhergehenden Ansprüche, **dadurch gekennzeichnet, daß** das Ansatzstück 58 vier Achsen (61, 62, 61', 62') umfaßt, die geeignet sind, mit den zwei Enden (53a, 53'a) von zwei Stangen (53, 53') hinsichtlich ihrer Befestigung an einem Hebel 54 zusammenzuarbeiten, wobei die vier Achsen zwischen den zwei Flanschen (63, 64) verschweißt sind.

11. Webmaschine mit einer Zugvorrichtung (3-17; 53-57) nach einem der vorhergehenden Ansprüche.

## Claims

1. Traction mechanism interposed between a dobby (1) and heald frames (2) of a loom, of the type comprising at least one tubular con-rod (3; 53, 53') with a flattened cross-section which, in order to be coupled to at least one oscillating link lever (1a, 4; 54) is provided with at least one joining piece (8; 58) comprising two end plates (13, 14; 63, 64), which are intended to be disposed on either side of the lever and articulated on the lever, and at least one part capable of penetrating and being immobilised in one end (3a; 53a, 53'a) of the con-rod, **characterised in that** the part capable of penetrating and being immobilised in one end of the con-rod is formed of two substantially parallel shafts (11, 12), each shaft comprising a first end (11a, 12a; 61a, 62a, 61'a, 62'a) disposed between the two end plates (13, 14; 63, 64) and welded to the two facing sides (13a, 14a; 63a, 64a) of the two end plates, and a deformable part (11g, 12g; 61g, 62g) whereby it is possible to adjust the distance (d) separating second ends (11b, 12b; 61b, 62b) of the shafts inside the con-rod.

2. Traction mechanism according to claim 1, **characterised in that** the shafts (11, 12; 61, 62) are manufactured by turning or sintering.

3. Traction mechanism according to either of claims 1 or 2, **characterised in that** the deformable part is formed by a zone of reduced cross-section (11g, 12g; 61g, 62g) of each shaft (11, 12; 61, 62, 61', 62).

4. Traction mechanism according to one of claims 1 to 3, **characterised in that** each shaft is provided, close to its second end (11b, 12b; 61b, 62b), with a release (11j, 12j; 61j, 62j) defining two parts (11c, 11d, 12c, 12d; 61c, 61d, 62c, 62d) capable of cooperating with means (16, 17; 66, 67) of adjusting the distance (d) separating the second ends and of bearing against an inner surface of the con-rod (3; 53, 53').

5. Traction mechanism according to claim 4, **characterised in that** the parts (11c, 11d, 12c, 12d; 61c, 61d, 62c, 62d) of the shafts (11, 12; 61, 62, 61', 62') capable of cooperating with the adjustment means (16, 17; 66, 67) have a larger cross-section than the deformable part (11g, 12g; 61g, 62g).

6. Traction mechanism according to either of claims 4 or 5 **characterised in that** the parts (11c, 11d, 12c, 12d; 61c, 61d, 62c, 62d) of the shafts (11, 12; 61, 62, 61', 62') capable of cooperating with the adjustment means are provided with perforations (11e, 11f, 12e, 12f; 61e, 61f, 62e, 62f) for receiving and/or centring the spacing screw (16, 17; 66, 67).

7. Traction mechanism according to claim 6, **characterised in that** the perforations (11e, 11f; 61e, 61f) of a first shaft (11; 61) go right through and are threaded at the pitch of the adjustment screws (16, 17; 66, 67), whereas the perforations (12e, 12f; 62e, 62f) of the second shaft (12; 62) are blind.

8. Traction mechanism according to one of the preceding claims, **characterised in that** each shaft (11, 12; 61, 62, 61', 62') carries, close to its first end (11a, 12a, 61a, 62a, 61'a, 62'a) at least one welding boss (11h, 11i, 12h, 12i; 61h, 61i, 62h, 62i) on the end plates (13, 14; 63, 64).

9. Traction mechanism according to one of the preceding claims, **characterised in that** each end plate (13, 14; 63, 64) is substantially formed by cutting out.

10. Traction mechanism according to one of the preceding claims, **characterised in that** the joining piece (58) comprises four shafts (61, 62, 61', 62') capable of cooperating with the ends (53a, 53'a) of two con-rods (53, 53') in order to attach the same to a lever (54), the four shafts being welded between the two end plates (63, 63').

11. Loom comprising a traction mechanism (3-17; 53-57) according to one of the preceding claims.
